(19) Europäisches Patentamt
European Patent Office
Office européen des brevets

(11)  EP 1 783 466 B1

(12)  **EUROPEAN PATENT SPECIFICATION**

(45) Date of publication and mention
of the grant of the patent:
**21.08.2013  Bulletin 2013/34**

(51) Int Cl.:
*E02F 9/20* (2006.01)      *B63B 9/08* (2006.01)
*B63B 25/02* (2006.01)     *B63B 35/28* (2006.01)
*B63J 99/00* (2009.01)     *G01F 23/00* (2006.01)
*G01F 23/14* (2006.01)     *G01F 23/296* (2006.01)

(21) Application number: **06076959.3**

(22) Date of filing: **31.10.2006**

(54)  **Direct hopper measuring method and device**

Verfahren und Vorrichtung zur direkten Messung eines Laderaums

Procédé et dispositif de mesure directe d'une trémie

(84) Designated Contracting States:
**AT BE BG CH CY CZ DE DK EE ES FI FR GB GR
HU IE IS IT LI LT LU LV MC NL PL PT RO SE SI
SK TR**

(30) Priority:  **07.11.2005  BE 200500536**

(43) Date of publication of application:
**09.05.2007  Bulletin 2007/19**

(60) Divisional application:
**10178967.5 / 2 261 612**

(73) Proprietor: **M.D.C.E. BVBA**
**8310 Brugge - St. Kruis (BE)**

(72) Inventor: **Druyts, Marcus Philippus Maria**
**8310 Brugge - St. Kruis (BE)**

(74) Representative: **D'Halleweyn, Nele Veerle Trees
Gertrudis et al
Arnold & Siedsma
Sweelinckplein 1
2517 GK Den Haag (NL)**

(56) References cited:
**EP-A- 0 697 583      JP-A- 9 229 842
NL-A- 8 001 034      NL-C- 134 122**

• **PATENT ABSTRACTS OF JAPAN vol. 011, no. 194
(P-588), 23 June 1987 (1987-06-23) -& JP 62
017640 A (TOSHIBA CORP; others: 01), 26
January 1987 (1987-01-26)**
• **PATENT ABSTRACTS OF JAPAN vol. 018, no. 117
(P-1699), 24 February 1994 (1994-02-24) -& JP 05
306985 A (MASAO NAGAI; others: 01), 19
November 1993 (1993-11-19)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a device for inferring information about a load, in particular a dredged load, according to the preamble of claim 1, comprising a container with a bottom, typically the hopper of a trailing suction hopper dredger, measuring means for determining the loading level of the load in the container, and a computer. The invention also relates to a method for inferring information about a load in a container with a bottom, wherein the height of the loading level in the container is measured.

NL 8001034 discloses a device and method for determining the total amount of dredged mixture in a hopper. The device comprises a number of pressure difference sensors $P_1$-$P_5$ which measure a pressure difference between two points in the hopper.

During dredging operations with a trailing suction hopper dredger the cargo hold of the vessel, referred to as the hopper, is filled with sand, sludge or related material, whereafter this load is transported to a dumping or pump-out location. A dredging cycle typically consists of dredging, transport, unloading of the load and the return journey to the dredging zone. Information about the load in the hopper is generally inferred during every cycle, usually before unloading: the load of the vessel is after all an essential element in production and thus of the efficiency of the dredging cycle and of the whole dredging operation.

According to a known method, known as indirect hopper measuring method, the weight of the load and the height of the load in the hopper are determined. The weight of the load can for instance be determined by measuring the draught fore and aft of the vessel, before and after loading. The measured difference in water displacement multiplied by the density of the water equals the weight of the load. The drawback of such an inference is that two large numbers are subtracted from each other, whereby there is a large margin of error, and that the vessel must not move for an accurate measurement. It is further known to determine the height of the load in the hopper by means of acoustic signals. A minimum of two echo-sounders is here usually arranged above the hopper. If the load consists of a homogeneous liquid mixture such as sludge, the density and the Tons Dry solid (TDS) can be calculated from the weight and the height (i.e. the volume). However, the load often consists of a sand-water mixture, and it is the desire to know the quantity of sand. If the level in the hopper is measured by means of acoustic signals using the known technique, it is not however known whether the height of a water or a sand surface is being measured. In the case of a water surface an additional measurement must be carried out with a plumb line, which of course only recognizes a sand surface. Ten measurements are for instance hereby taken and the quantity of sand in the hopper is then calculated using hopper tables. Such a hopper measuring method has the drawback that it cannot be automated since it is not known whether a water surface or a sand surface has been measured after the measurement by the echo-sounder.

The present invention has for its object to provide a device and a method of the type stated in the preamble, with which it is possible to determine in automated manner whether the load has a liquid upper surface or, conversely, a solid particle upper surface.

The device according to the invention is distinguished for this purpose by the features of the characterizing part of claim 1. At least one first measuring point with a pressure gauge is provided close to the bottom, this first measuring point being adapted to measure the hydrostatic pressure at the bottom.

The height of the liquid column in the hopper can be determined from the measurement of the hydrostatic pressure, and from the comparison of this height to the measured loading level it is possible to determine whether the bottom surface of the load is a liquid surface or a solid particle surface. Such measurements can be readily transmitted to a computer which can draw the above stated inference, for instance using a program.

According to a preferred embodiment of the device according to the invention for inferring information about a load consisting of a heterogeneous mixture of solid particles in a liquid or in a homogeneous liquid mixture, the first measuring point is accommodated in a hydrostatic space which substantially only the liquid or the homogeneous liquid mixture can enter, and not the solid particles. Such a hydrostatic space will generally be fully immersed in water before loading, and it suffices to ensure that no solid particles penetrate into the hydrostatic space during loading. This can be realized for instance by avoiding any flow in this space. A possible embodiment of such a hydrostatic space will be further described with reference to the figure description.

The method according to the invention is distinguished by the features of the characterizing part of claim 5. The hydrostatic pressure close to the bottom of the container is measured, and from the measurement of the loading level and the measurement of the hydrostatic pressure determined information about the load is inferred, such as

- the fact of whether the upper surface of the load is a liquid surface or a dry solid surface, in the case the load consists of a mixture of a dry solid in a liquid or homogeneous liquid mixture; or
- the density of the load, in the case the load is a homogeneous liquid mixture.

Such a method of operation allows complete automation of the hopper measuring method, wherein the results of the measurements are transmitted to a computer which draws the inference of the necessary information and, on the basis of this inference, for instance determines whether further additional measurements are also necessary.

Preferably, the inference that the upper surface of the load is a dry solid surface is based on the condition that the measured loading level is greater than a limit value inferred from the hydrostatic pressure, and in the opposite case it is inferred that the upper surface is a liquid surface. If it is inferred that the upper surface is a liquid surface, it is then possible according to a further developed embodiment to measure the height of the quantity of liquid above the dry solid surface, for instance using a plumb line.

According to the invention, the total pressure close to the bottom $\sigma t1$ is measured, and the measured hydrostatic pressure close to the bottom w1 is compared to this total pressure $\sigma t1$, whereafter from this comparison is inferred:

- whether the load is a substantially homogeneous mixture (in the case of a dredged load typically a sludge load);
- whether the load is, conversely, a heterogeneous mixture of a dry solid in a liquid (in the case of a dredged load typically a sand water load).

According to one possibility in the case that the upper surface is a dry solid surface, the density of the dry solid is inferred from the measured loading level h1, the measured hydrostatic pressure $\sigma w1$, the measured total pressure $\sigma t1$ and density pw of the liquid or the homogeneous liquid mixture, and preferably on the basis of the following formulae:

$$\sigma t1 - \sigma w1 = g.(h1 - hw).\rho + g.hw.(\rho - \rho w) \; ;$$

$$hw = \sigma w/(g.\rho w);$$

wherein g is the gravitational acceleration.

According to one possibility in the case that the upper surface is a liquid surface, the sand height hz is also measured and the density $\rho$ of the dry solid is inferred from the measured hydrostatic pressure $\sigma w1$, the measured total pressure $\sigma t1$ and the density pw of the liquid or the homogeneous liquid mixture, and preferably on the basis of the following formula:

$$\sigma t1 - \sigma w1 = g.hz.(\rho - \rho w),$$

wherein g is the gravitational acceleration.

According to yet another possibility, if it is inferred that the upper surface is a liquid surface, the total pressure $\sigma t2$ and hydrostatic pressure $\sigma w2$ are measured at a determined height h2 above the bottom, and the following formulae are used to determine the density $\rho$ and height hz of the dry solid:

$$\sigma t1 - \sigma w1 = g.hz.(\rho - \rho w);$$

$$\sigma t2 - \sigma w2 = g.(hz \; h2).(\rho - \rho w);$$

wherein g is the gravitational acceleration.

The invention will be further elucidated on the basis of a number of non limitative exemplary embodiments of the device and method according to the invention, which are described hereinbelow with reference to the accompanying figures, in which:

Figure 1 illustrates the distribution of forces and water pressure in a grain skeleton;

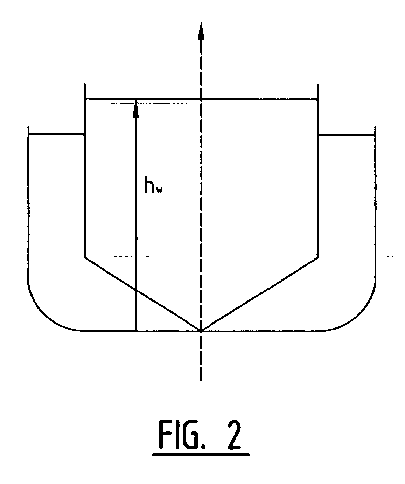

Figure 2 illustrates a cross section of a hopper of a trailing suction hopper dredger;
Figures 3A and 3B show graphs of the hydrostatic pressure as a function of the height for a water sand mixture with respectively a water upper surface (A) and a sand upper surface (B);
Figures 4A and 4B show the hydrostatic and total pressure as a function of the height for respectively a sludge load (A) and a sand water load (B);
Figures 5A and 5B show the hydrostatic pressure, the total pressure and the grain pressure as a function of the height for a sand water load with respectively a sand upper surface (A) and a water upper surface (B);

Figures 6A and 6B show respectively a top view and a cross section of a hydrostatic space in which the hydrostatic pressure can be measured.

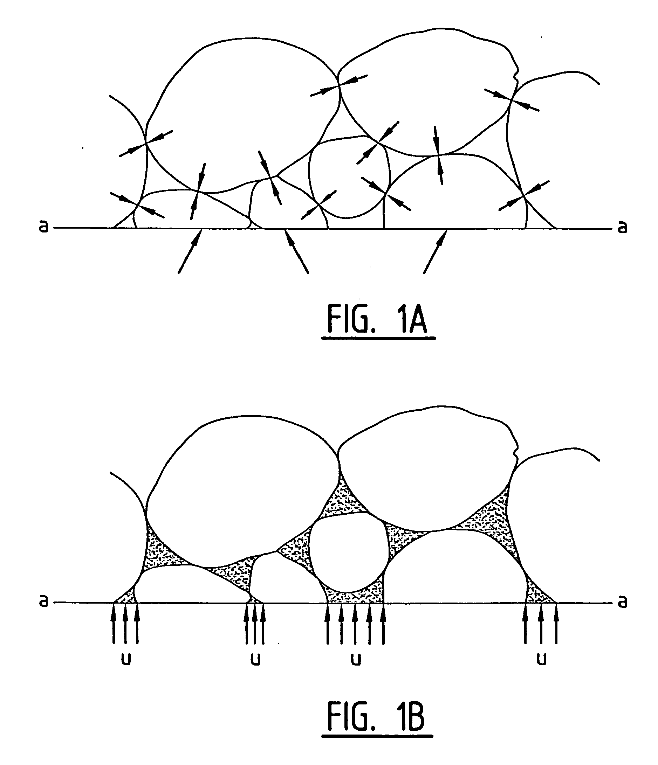

Figure 1 shows schematically that two pressure components occur independently of each other in a sand water mixture: the water pressure and the grain pressure.

In the simple case of a sand water mixture in the hopper of a trailing suction hopper dredger a first component of the total pressure consists of the water pressure, which is equal to the hydrostatic water pressure. At a random point in the load this hydrostatic pressure depends only on the water level in the hopper and is given by the following, known formula:

$$\sigma w = hw.\rho w.g$$

with

$\sigma w$    hydrostatic water pressure
hw    height of the water column in the hopper
$\rho w$    density of the water
g    gravitational acceleration

The second component of the total pressure is the grain pressure, which is caused by the sand grains in the heterogeneous sand water mixture. In a horizontal plane the grains transmit the weight of the sand grains thereabove, reduced by the Archimedes force in the case that they are situated in water.

It is further noted that the grains can to a certain extent transmit a transverse force relative to each other so that a different grain pressure will for instance prevail in one vertical plane than in another vertical plane. This is in contrast to the hydrostatic pressure of the water, which is transmitted equally in all directions.

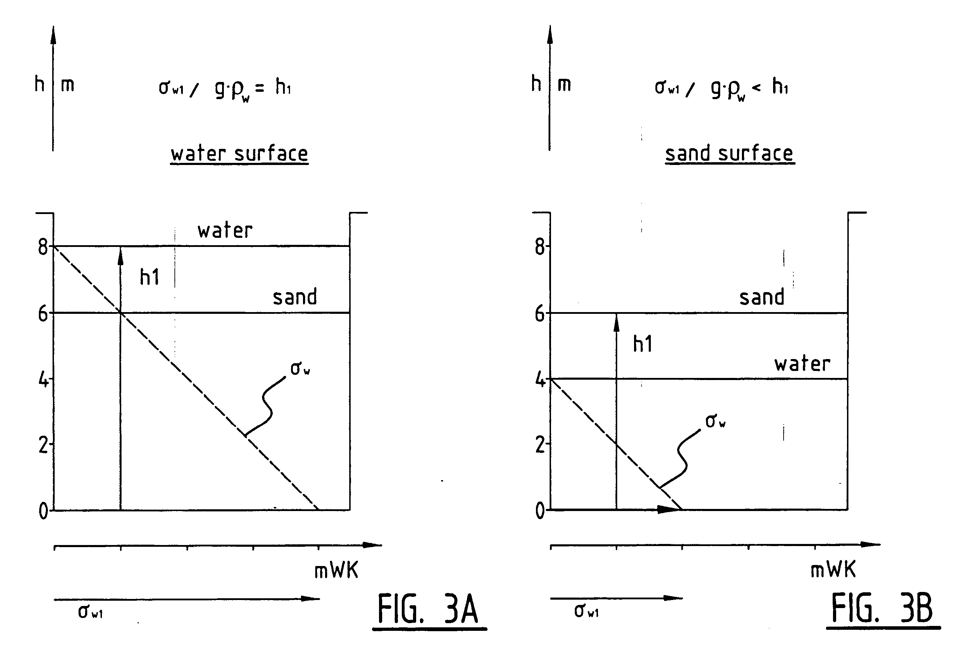

A possible embodiment of the method according to the invention will now be illustrated referring first to figure 3 which is merely illustrative and does not limit the scope of protection. As shown, two situations can occur in the case of a sand water load:

(1) fig. 3(A): the upper surface of the load is a water surface. In theory it is the case here that the hydrostatic pressure at the bottom $\sigma w1$ divided by the gravitational acceleration g and the density of the water pw is equal to the height h1 of the load in the hopper, or $\sigma w1/(\rho w.g) = h1$. This is shown schematically in figure 3A.

(2) fig. 3(B): the upper surface of the load is a sand surface. It is theoretically the case here that the hydrostatic pressure $\sigma w1$ at the bottom divided by the gravitational acceleration g and the density of the water pw is smaller than the height of the load in the hopper h1, or $\sigma w1/(\rho w.g) < h1$. This is illustrated in figure 3B.

If the hydrostatic pressure at the bottom and the height of the load in the hopper are measured, it is thus easy to determine whether the upper surface consists of water or of sand. In practice it will be checked whether $\sigma w1/(\rho w.g) < h1 + \delta$, wherein $\delta$ is a determined margin which for instance takes into account measurement errors and the like. If this condition is met, the inference is that the upper surface is a sand surface, and in the other case the inference is that the upper surface is a water surface. Such a comparison and inference can be readily implemented in a program. Such a measuring procedure can thus be organized automatically and without human intervention on the basis of pressure measurements and acoustic measurements which are transmitted to a computer.

Nor has it been possible heretofore to make an unambiguous distinction between a load of sludge and a load of sand by means of a direct measurement, which problem can also be solved using the device and method according to the invention, as will be described hereinbelow.

If sludge has been loaded into the hopper of a dredging vessel, this sludge has then generally been stirred and mixed intensively and thus behaves as a homogeneous liquid mixture. This means that the hydrostatic pressure is also the total pressure of the liquid column, and can be represented by the known formula:

$$\sigma s = hs.\rho s.g$$

with

σs    hydrostatic liquid pressure
hs    height of the liquid column in the hopper
ρs    density of the liquid
g    gravitational acceleration

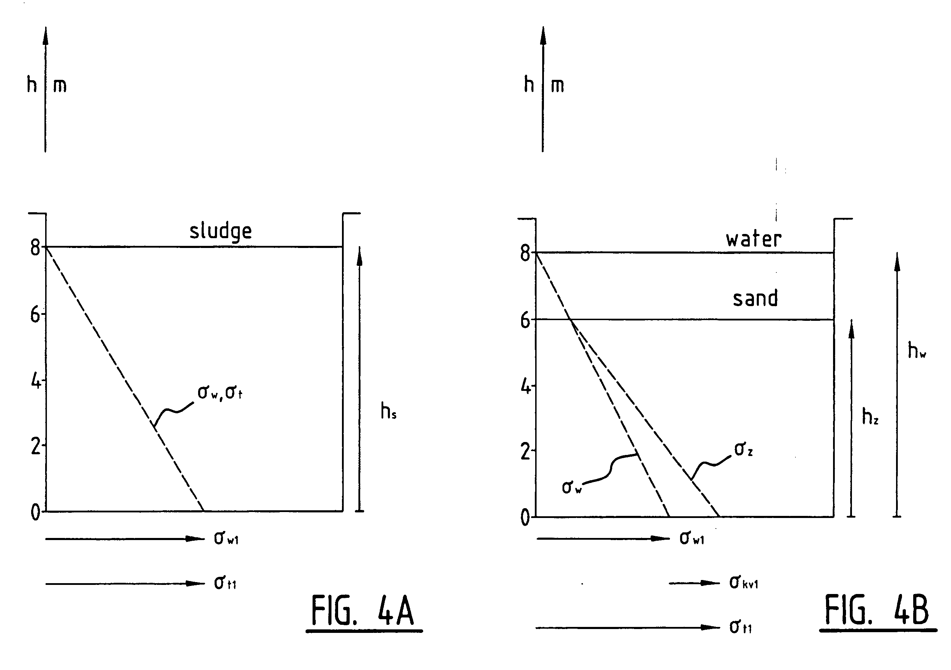

If a sand water mixture is loaded into the hopper of a dredging vessel, the total pressure, as already set forth above, then has two components: the hydrostatic pressure of the water and the grain pressure. This is shown in figure 4A.

In the case of a sand water mixture the hydrostatic (water) pressure is consequently different from the total pressure (water pressure + grain pressure). This is illustrated in figure 4B.

According to an embodiment of the method of the invention:

- the total pressure close to the bottom $\sigma t1$ and the hydrostatic pressure close to the bottom $\sigma w1$ are measured;
- these values are compared; and
- the inference is drawn from this comparison:

    - whether the load is a sludge load ($\sigma t1 = \sigma w1$, figure 4A),
    - whether the load is, conversely, a sand water mixture ($\sigma t1 > \sigma w1$, figure 4B).

Note that it is possible in the case of a sludge load to determine the density of the sludge ps from the measured hydrostatic pressure and the measured loading level on the basis of the formula $\sigma s = hs.\rho s.g$. If a load of sea water is present in the hopper, it is possible in analogous manner to determine the density of the sea water.

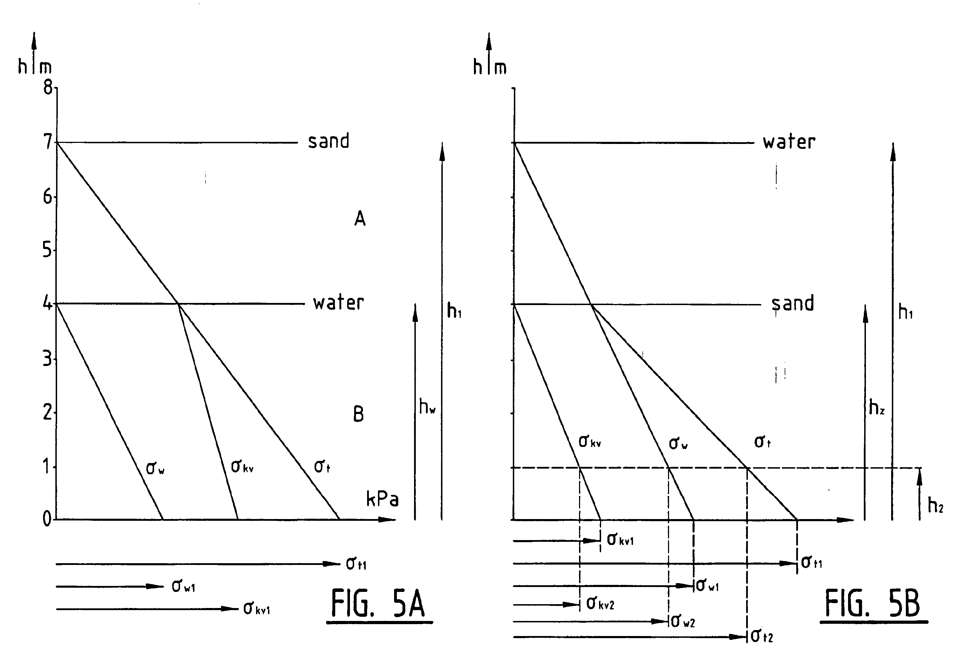

It will now be illustrated with reference to figures 5A and 5B how, in accordance with yet another variant of the method according to the invention, the density $\rho$ of the dry solid, here sand in a sand water mixture, can be determined. According to this variant the following quantities are first measured:

- the loading level h1 in the hopper, for instance using echo sounders;
- the hydrostatic pressure close to bottom $\sigma w1$; and
- the total pressure close to bottom $\sigma t1$. These are transmitted to a processing unit of for instance a computer, and the hydrostatic pressure $\sigma w1$ is there first compared to the height h1. As already set forth above, it can be inferred from this comparison whether the upper surface is a sand surface. Both situations will now be discussed.

(1) <u>Upper surface is a sand surface (figure 5A)</u>

The total vertical grain pressure at the bottom $\sigma kv1$ is given by the difference between the total pressure and the hydrostatic pressure: $\sigma kv1 = \sigma t1 - \sigma w1$. The grain pressure at the bottom of the dry sand layer A is given by: $\sigma kvA = g.(h1 - hw).\rho$, with g: the gravitational acceleration;
h1: the loading level in the hopper;
hw: the water level in the hopper which can be calculated from $hw = \sigma w1/(g.\rho w)$ with pw the density of the water;
p: the density of the dry sand.

The grain pressure which is developed over the wet sand layer B is given by: $\sigma kvB = g.hw.(p - pw)$. Since the total grain pressure $\sigma kv1 = \sigma kvA + \sigma kvB$, the density $\rho$ of the dry solid can be determined from:

$$\sigma t1 - \sigma w1 = g.(h1 - hw).\rho + g.hw.(\rho - \rho w).$$

(2) <u>Upper surface is a water surface (figure 5B)</u>

In such a situation it is the case that the grain pressure at the bottom is given by:

$$\sigma kv1 = \sigma t1 - \sigma w1 = g.hz.(\rho - \rho w),$$

wherein g is the gravitational acceleration and hz the sand level. Two more unknowns occur in this comparison, i.e. the sand level hz and the dry solid density p.

According to a first possible variant, the sand level is measured using for instance a plumb line, and the dry solid density $\rho$ is then determined from the above comparison. Note that, in such a case, the measurement of the loading level is not necessary for the purpose of calculating the dry solid density p.

According to a second possible variant, the total pressure σt2 and hydrostatic pressure σw2 are measured at a determined height h2 above the bottom, and the following formulae are used to determine the density $\rho$ and the height hz of the dry solid:

$$\sigma t1 - \sigma w1 = g.hz.(\rho - \rho w);$$

$$\sigma t2 - \sigma w2 = g.(hz\ h2).(\rho - \rho w).$$

According to this variant no measurements using a plumb line are therefore necessary.

It is finally noted that it is also possible to use two measurements at different levels (for instance close to the bottom and at a height h2) of the lateral total pressure and the lateral grain pressure in order to determine the density of the dry solid.

From the above description of the different variants of the method according to the invention it will thus be apparent that a fully automatic inference of information about a dredged load is possible by means of pressure measurements.

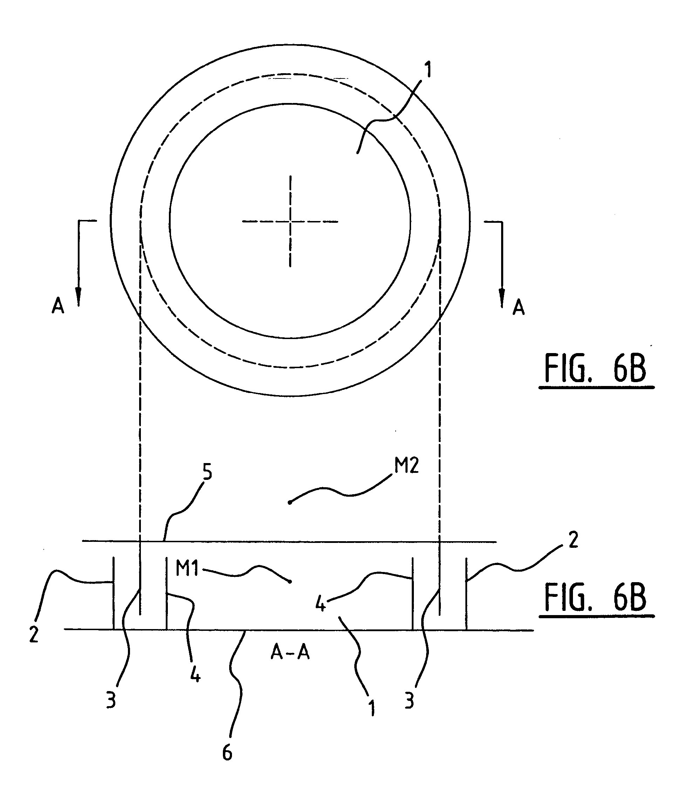

A possible embodiment of the hydrostatic space of a device according to the invention will now be discussed with reference to figures 6A and B. The hydrostatic space here consists of a cylindrical space 1 in which a measuring point M1 of the hydrostatic pressure is arranged. This space is bounded by an upper wall 5, a lower wall 6 and a number of cylindrical side walls 2, 3, 4 which are mutually offset in height such that water, but no sand, can enter the hydrostatic space, and that flow in this space is avoided. A second pressure gauge for measuring point M2 can for instance be provided above this space for the purpose of measuring the total pressure.

The invention is not limited to the above described embodiment variants, but on the contrary comprises all other variants which can be envisaged by the skilled person, and the scope of the invention is defined solely by the appended claims.

## Claims

1.  Device for inferring information about a load, in particular a dredged load, comprising a container with a bottom, in particular the hopper of a trailing suction hopper dredger, measuring means for determining the loading level h1 of the load in the container, and a computer, wherein at least one first measuring point (M1) with a pressure gauge is provided close to the bottom, this first measuring point being adapted to measure the hydrostatic pressure at the bottom σw1 ; **characterized in that** a second measuring point (M2) with a pressure gange is adapted to measure the total pressure σt1 at the bottom; said computer being arranged for receiving the measured hydrostatic pressure σw1 and the total pressure σt1 and for comparing the hydrostatic pressure σw1 with the total pressure σt1, and for inferring from this comparison

    - whether the load is a substantially homogeneous load, typically sludge,
    - whether the load is, conversely, a heterogeneous mixture of a dry solid in a liquid, typically a sand-water mixture.

2.  Device as claimed in claim 1 for inferring information about a load consisting of a heterogeneous mixture of solid particles in a liquid, such as a sand-water mixture, or in a homogeneous liquid mixture, **characterized in that** the first measuring point is accommodated in a hydrostatic space (1) which substantially only the liquid or the homogeneous liquid mixture can enter, and not the solid particles.

3.  Device as claimed in any of the foregoing claims, **characterized in that** the measuring means for determining the loading level in the container are acoustic means such as echo-sounders.

4.  Device as claimed in any of the foregoing claims, **characterized in that** a third and fourth measuring point are arranged at a determined height above the bottom for measuring respectively the hydrostatic pressure and the total pressure at this determined height.

5.  Method for inferring information about a load, in particular a dredged load, in a container with a bottom, in particular in the hopper of a trailing suction hopper dredger, wherein the height of the loading level in the container is measured, wherein the hydrostatic pressure close to the bottom of the container $\sigma w1$ is measured; and wherein information about the load is inferred from the measurement of the loading level h1 and the measurement of the hydrostatic pressure $\sigma w1$ ;

**characterized in that** the total pressure close to the bottom $\sigma t1$ is measured; and that the hydrostatic pressure close to the bottom $\sigma w1$ is compared to the total pressure $\sigma t1$, and that from this comparison is inferred

- whether the load is a substantially homogeneous load, typically sludge,
- whether the load is, conversely, a heterogeneous mixture of a dry solid in a liquid, typically a sand-water mixture.

6. Method as claimed in claim 5 for inferring information about a load consisting of a mixture of a dry solid in a liquid or a homogenous liquid mixture, **characterized in that** from the measurement of the loading level and the measurement of the hydrostatic pressure $\sigma w1$ is inferred whether the upper surface of the load is a liquid surface or a dry solid surface.

7. Method as claimed in claim 6, **characterized in that** if the condition is met that the measured loading level h1 is greater than a limit value (hw + $\delta$) inferred from the hydrostatic pressure $\sigma w1$, it is inferred that the upper surface of the load is a dry solid surface; and that if this condition is not met, it is inferred that the upper surface is a liquid surface.

8. Method as claimed in either of the claims 6-7, **characterized in that** if it is inferred that the upper surface is a liquid surface, the height of the quantity of liquid above the dry solid surface is measured, for instance using a plumb line.

9. Method as claimed in claim 7, **characterized in that** if it is inferred that the upper surface is a dry solid surface, the total pressure close to the bottom $\sigma t1$ is measured, and that the density $\rho$ of the dry solid is inferred from the measured loading level h1, the measured hydrostatic pressure $\sigma w1$, the measured total pressure $\sigma t1$ and the density pw of the liquid or the homogeneous liquid mixture, preferably on the basis of the following formulae:

$$\sigma t1 - \sigma w1 = g.(h1 - hw).\rho + g.hw.(\rho - \rho w) \; ;$$

$$hw = \sigma w/(g.\rho w);$$

wherein g is the gravitational acceleration.

10. Method as claimed in claim 6, **characterized in that** if it is inferred that the upper surface is a liquid surface, the total pressure close to the bottom $\sigma t1$ and the sand height hz are measured, and that the density $\rho$ of the dry solid is inferred from the measured hydrostatic pressure $\sigma w1$, the measured total pressure $\sigma t1$, the measured sand height hz and the density pw of the liquid or the homogeneous liquid mixture, preferably on the basis of the following formulae:

$$\sigma t1 - \sigma w1 = g.hz.(\rho - \rho w),$$

wherein g is the gravitational acceleration.

11. Method as claimed in claim 6, **characterized in that** if it is inferred that the upper surface is a liquid surface, the total pressure close to the bottom $\sigma t1$, and the total pressure $\sigma t2$ and hydrostatic pressure $\sigma w2$ are measured at a determined height h2 above the bottom, and that the following formulae are used to determine the density $\rho$ and the height hz of the dry solid from the measurements of $\sigma t1$, $\sigma w1$, $\sigma t2$, $\sigma w2$ :

$$\sigma t1 - \sigma w1 = g.hz.(\rho - \rho w);$$

$$\sigma t2 - \sigma w2 = g.(hz-h2).(\rho - \rho w);$$

wherein g is the gravitational acceleration.

**Patentansprüche**

1. Vorrichtung zum Ableiten einer Information über eine Ladung, insbesondere eine ausgebaggerte Ladung, aufweisend
einen Behälter mit einem Boden, insbesondere den Schürfkübel eines Schleppsaugschürfkübelnassbaggers,
Messmittel zum Bestimmen des Ladeniveaus h1 der Ladung in dem Behälter, und
einen Computer,
wobei zumindest ein erster Messpunkt (M1) mit einer Druckmesslehre nahe dem Boden vorgesehen ist, und
dieser erste Messpunkt angepasst ist, den hydrostatischen Druck an dem Boden $\sigma w1$ zu messen,
**dadurch gekennzeichnet, dass**
ein zweiter Messpunkt (M2) mit einer Druckmesslehre angepasst ist, den Gesamtdruck $\sigma t1$ an dem Boden zu messen; und
der Computer angeordnet ist, um den gemessenen hydrostatischen Druck $\sigma w1$ und den Gesamtdruck $\sigma t1$ zu empfangen, und um den hydrostatischen Druck $\sigma w1$ mit dem Gesamtdruck $\sigma t1$ zu vergleichen und aus diesem Vergleich abzuleiten,

   - ob die Ladung eine im Wesentlichen homogene Ladung, typischerweise Schlamm, ist, oder
   - ob die Ladung im umgekehrten Fall ein heterogenes Gemisch aus einem trockenen Festkörper in einer Flüssigkeit, typischerweise ein Sand-Wasser-Gemisch, ist.

2. Vorrichtung zum Ableiten einer Information über eine Ladung, die aus einem heterogenen Gemisch aus festen Teilchen in einer Flüssigkeit, wie etwa einem Sand-Wasser-Gemisch, oder aus einem homogenen flüssigen Gemisch besteht,
**dadurch gekennzeichnet, dass**
der erste Messpunkt in einem hydrostatischen Raum (1) aufgenommen ist, in den im Wesentlichen nur die Flüssigkeit oder das homogene flüssige Gemisch eintreten kann, und nicht die festen Teilchen.

3. Vorrichtung wie in einem der vorangehenden Ansprüche beansprucht,
**dadurch gekennzeichnet, dass**
die Messmittel zum Bestimmen des Ladeniveaus in dem Behälter akustische Mittel, wie etwa Echolote, sind.

4. Vorrichtung wie in einem der vorangehenden Ansprüche beansprucht,
**dadurch gekennzeichnet, dass**
ein dritter und vierter Messpunkt in einer bestimmten Höhe über dem Boden zum jeweiligen Messen des hydrostatischen Drucks und des Gesamtdrucks in dieser bestimmten Höhe angeordnet sind.

5. Verfahren zum Ableiten einer Information über eine Ladung, insbesondere eine ausgebaggerte Ladung, in einem Behälter mit einem Boden, insbesondere in dem Schürfkübel eines Schleppsaugschürfkübelnassbaggers,
wobei die Höhe des Ladeniveaus in dem Behälter gemessen wird,
wobei der hydrostatische Druck nahe dem Boden des Behälters $\sigma w1$ gemessen wird; und
wobei eine Information über die Ladung aus der Messung des Ladeniveaus h1 und der Messung des hydrostatischen Drucks $\sigma w1$ abgeleitet wird;
**dadurch gekennzeichnet,**
**dass** der Gesamtdruck nahe dem Boden $\sigma t1$ gemessen wird; und
**dass** der hydrostatische Druck nahe dem Boden $\sigma w1$ mit dem Gesamtdruck $\sigma t1$ verglichen wird, und
**dass** aus diesem Vergleich abgeleitet wird,

   - ob die Ladung eine im Wesentlichen homogene Ladung, typischerweise Schlamm, ist, oder
   - ob die Ladung im umgekehrten Fall ein heterogenes Gemisch aus einem trockenen Festkörper in einer Flüssigkeit, typischerweise ein Sand-Wasser-Gemisch, ist.

6. Verfahren zum Ableiten einer Information über eine Ladung, die aus einem Gemisch aus einem trockenen Festkörper in einer Flüssigkeit oder einem homogenen flüssigen Gemisch besteht, wie in Anspruch 5 beansprucht,
**dadurch gekennzeichnet, dass**
aus der Messung des Ladeniveaus und der Messung des hydrostatischen Drucks $\sigma w1$ abgeleitet wird, ob die obere Oberfläche der Ladung eine flüssige Oberfläche oder eine trockene feste Oberfläche ist.

7. Verfahren wie in Anspruch 6 beansprucht,
**dadurch gekennzeichnet,**
**dass**, wenn die Bedingung erfüllt ist, dass das gemessene Ladeniveau h1 größer als ein Grenzwert (hw + δ) ist, aus dem hydrostatischen Druck σw1 abgeleitet wird, dass die obere Oberfläche der Ladung eine trockene feste Oberfläche ist; und
**dass**, wenn diese Bedingung nicht erfüllt ist, abgeleitet wird, dass die obere Oberfläche eine flüssige Oberfläche ist.

8. Verfahren wie in einem der Ansprüche 6 - 7 beansprucht,
**dadurch gekennzeichnet, dass**,
wenn abgeleitet wird, dass die obere Oberfläche eine flüssige Oberfläche ist, die Höhe der Flüssigkeitsmenge über der trockenen festen Oberfläche zum Beispiel unter Verwendung eines Senkbleis gemessen wird.

9. Verfahren wie in Anspruch 7 beansprucht,
**dadurch gekennzeichnet,**
**dass**, wenn abgeleitet wird, dass die obere Oberfläche eine trockene feste Oberfläche ist, der Gesamtdruck nahe dem Boden σt1 gemessen wird, und
**dass** die Dichte ρ des trockenen Festkörpers aus dem gemessenen Ladeniveau h1, dem gemessenen hydrostatischen Druck σw1, dem gemessenen Gesamtdruck σt1 und der Dichte pw der Flüssigkeit oder des homogenen flüssigen Gemischs vorzugsweise auf der Basis der folgenden Formeln abgeleitet wird:

$$\sigma t1 - \sigma w1 = g.(h1 - hw).\rho + g.hw.(\rho - \rho w);$$

$$hw = \sigma w/(g. \rho w),$$

wobei g die Erdbeschleunigung ist.

10. Verfahren wie in Anspruch 6 beansprucht,
**dadurch gekennzeichnet,**
**dass**, wenn abgeleitet wird, dass die obere Oberfläche eine flüssige Oberfläche ist, der Gesamtdruck nahe dem Boden σt1 und die Sandhöhe hz gemessen werden, und
**dass** die Dichte ρ des trockenen Festkörpers aus dem gemessenen hydrostatischen Druck σw1, dem gemessenen Gesamtdruck σt1, der gemessenen Sandhöhe hz und der Dichte pw der Flüssigkeit oder des homogenen flüssigen Gemischs vorzugsweise auf der Basis der folgenden Formel:

$$\sigma t1 - \sigma w1 = g.hz.(\rho - \rho w)$$

abgeleitet wird,
wobei g die Erdbeschleunigung ist.

11. Verfahren wie in Anspruch 6 beansprucht,
**dadurch gekennzeichnet,**
**dass**, wenn abgeleitet wird, dass die obere Oberfläche eine flüssige Oberfläche ist, der Gesamtdruck nahe dem Boden σt1 und der Gesamtdruck σt2 und ein hydrostatischer Druck σw2 in einer bestimmten Höhe h2 über dem Boden gemessen werden, und
**dass** die folgenden Formeln verwendet werden, um die Dichte ρ und die Höhe hz des trockenen Festkörpers aus den Messungen von σt1, σw1, σt2, σw2 zu bestimmen:

$$\sigma t1 - \sigma w1 = g.hz.(\rho - \rho w);$$

$$\sigma t2 - \sigma w2 = g.(hz-h2).(\rho - \rho w),$$

wobei g die Erdbeschleunigung ist.

## Revendications

1. Dispositif pour déduire des informations concernant une charge, en particulier une charge draguée, comprenant un contenant avec un fond, en particulier la benne d'une drague suceuse porteuse, des moyens de mesure pour déterminer le niveau de chargement h1 de la charge dans le contenant, et un ordinateur, dans lequel au moins un premier point de mesure (M1) avec une jauge de pression est prévu à proximité du fond, ce premier point de mesure étant adapté pour mesurer la pression hydrostatique dans le fond $\sigma w1$ ; **caractérisé en ce qu'**un deuxième point de mesure (M2) avec une jauge de pression est adapté pour mesurer la pression totale $\sigma t1$ dans le fond ; ledit ordinateur étant agencé pour recevoir la pression hydrostatique $\sigma w1$ mesurée et la pression totale $\sigma t1$ et pour comparer la pression hydrostatique $\sigma w1$ avec la pression totale $\sigma t1$, et pour déduire à partir de cette comparaison

   - si la charge est une charge sensiblement homogène, généralement de la boue,
   - si la charge est, à l'inverse, un mélange hétérogène d'un solide sec dans un liquide, généralement un mélange de sable et d'eau.

2. Dispositif selon la revendication 1 pour déduire des informations concernant une charge consistant en un mélange hétérogène de particules solides dans un liquide, tel qu'un mélange de sable et d'eau, ou dans un mélange de liquides homogène, **caractérisé en ce que** le premier point de mesure est situé dans un espace hydrostatique (1) dans lequel sensiblement uniquement le liquide ou le mélange de liquides homogène peut entrer, et non les particules solides.

3. Dispositif selon l'une quelconque des revendications précédentes, **caractérisé en ce que** les moyens de mesure pour déterminer le niveau de chargement dans le contenant sont des moyens acoustiques tels que des échosondeurs.

4. Dispositif selon l'une quelconque des revendications précédentes, **caractérisé en ce que** des troisième et quatrième points de mesure sont agencés à une hauteur déterminée au-dessus du fond pour mesurer, respectivement, la pression hydrostatique et la pression totale à cette hauteur déterminée.

5. Procédé pour déduire des informations concernant une charge, en particulier une charge draguée dans un contenant avec un fond, en particulier la benne d'une drague suceuse porteuse, dans lequel la hauteur du niveau de chargement dans le contenant est mesurée, dans lequel la pression hydrostatique à proximité du fond du contenant $\sigma w1$ est mesurée, et dans lequel des informations concernant la charge sont déduites de la mesure du niveau de chargement h1 et de la mesure de la pression hydrostatique $\sigma w1$ ;
   **caractérisé en ce que** la pression totale à proximité du fond $\sigma t1$ est mesurée ; et **en ce que** la pression hydrostatique à proximité du fond $\sigma w1$ est comparée à la pression totale $\sigma t1$, et **en ce que**, à partir de cette comparaison, il est déduit

   - si la charge est une charge sensiblement homogène, généralement de la boue
   - si la charge est, à l'inverse, un mélange hétérogène d'un solide sec dans un liquide, généralement un mélange de sable et d'eau.

6. Procédé selon la revendication 5 pour déduire des informations concernant une charge consistant en un mélange d'un solide sec dans un liquide ou un mélange de liquides homogène, **caractérisé en ce que**, à partir de la mesure du niveau de chargement et de la mesure de la pression hydrostatique $\sigma w1$, il est déduit si la surface supérieure de la charge est une surface de liquide ou une surface de solide sec.

7. Procédé selon la revendication 6, **caractérisé en ce que**, si la condition dans laquelle le niveau de chargement h1 mesuré est supérieur à une valeur limite (hw + $\delta$) déduite de la pression hydrostatique $\sigma w1$ est satisfaite, il est déduit que la surface supérieure de la charge est une surface de solide sec ; et **en ce que**, si cette condition n'est pas satisfaite, il est déduit que la surface supérieure est une surface de liquide.

**8.** Procédé selon l'une ou l'autre des revendications 6 et 7, **caractérisé en ce que**, s'il est déduit que la surface supérieure est une surface de liquide, la hauteur de la quantité de liquide au-dessus de la surface de solide sec est mesurée, par exemple en utilisant un fil à plomb.

**9.** Procédé selon la revendication 7, **caractérisé en ce que**, s'il est déduit que la surface supérieure est une surface de solide sec, la pression totale à proximité du fond σt1 est mesurée, et **en ce que** la densité p du solide sec est déduite à partir du niveau de chargement h1 mesuré, de la pression hydrostatique σw1 mesurée, de la pression totale σt1 mesurée et de la densité pw du liquide ou du mélange de liquides homogène, de préférence sur la base des formules suivantes :

$$\sigma t1 - \sigma w1 = g.(h1 - hw).\rho + g.hw . (\rho - \rho w) ;$$

$$hw = \sigma w/(g.\rho w) ;$$

où g est l'accélération de la gravitation.

**10.** Procédé selon la revendication 6, **caractérisé en ce que**, s'il est déduit que la surface supérieure est une surface de liquide, la pression totale à proximité du fond σt1 et la hauteur de sable hz sont mesurées, et **en ce que** la densité p du solide sec est déduite de la pression hydrostatique σw1 mesurée, de la pression totale σt1 mesurée, de la hauteur de sable hz mesurée et de la densité pw du liquide ou du mélange de liquides homogène, de préférence sur la base de la formule suivante :

$$\sigma t1 - \sigma w1 = g.hz.(\rho - \rho w),$$

où g est l'accélération de la gravitation.

**11.** Procédé selon la revendication 6, **caractérisé en ce que**, s'il est déduit que la surface supérieure est une surface de liquide, la pression totale à proximité du fond σt1, et la pression totale σt2 et la pression hydrostatique σw2 sont mesurées à une hauteur déterminée h2 au-dessus du fond, et **en ce que** les formules suivantes sont utilisées pour déterminer la densité p et la hauteur hz du solide sec à partir des mesures de σt1, σw1, σt2, σw2 :

$$\sigma t1 - \sigma w1 = g.hz.(\rho - \rho w) ;$$

$$\sigma t2 - \sigma w2 = g.(hz - h2).(\rho - \rho w) ;$$

où g est l'accélération de la gravitation.

## FIG. 1A

## FIG. 1B

FIG. 2

FIG. 3A

FIG. 3B

14

FIG. 4B

FIG. 4A

FIG. 5A

FIG. 5B

EP 1 783 466 B1

16

1

A

A

FIG. 6B

5

M2

M1

2

2

FIG. 6B

4

4

A-A

3

3

6

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 8001034